## Europäisches Patentamt
## European Patent Office
## Office européen des brevets

(19)

(11) Numéro de publication : **0 033 270 B1**

(12)

# FASCICULE DE BREVET EUROPÉEN

(45) Date de publication du fascicule du brevet :
22.06.83

(21) Numéro de dépôt : **81400086.5**

(22) Date de dépôt : **22.01.81**

(51) Int. Cl.³ : **B 23 K   7/08**, B 23 K 35/22

(54) **Procédé de découpage par fissuration d'une paroi métallique ou d'alliage métallique.**

(30) Priorité : **28.01.80 FR 8001771**

(43) Date de publication de la demande :
**05.08.81 Bulletin 81/31**

(45) Mention de la délivrance du brevet :
**22.06.83 Bulletin 83/25**

(84) Etats contractants désignés :
**BE DE GB IT**

(56) Documents cités :
**BE A 493 730**
**US A 2 438 344**

(73) Titulaire : **COMMISSARIAT A L'ENERGIE ATOMIQUE**
**Etablissement de Caractère Scientifique Technique**
**et Industriel**
**B.P. 510**
**F-75752 Paris Cedex 15 (FR)**

(72) Inventeur : **Chavand, Jean**
**31, rue Colonel Bougault**
**F-38100 Grenoble (FR)**
Inventeur : **Daguenet, Maurice**
**Le Petit Chatelard**
**F-38113 Veurey (FR)**
Inventeur : **Gillet, René**
**9, rue Docteur Schweitzer**
**F-38100 Grenoble (FR)**

(74) Mandataire : **Mongrédien, André et al**
**c/o BREVATOME 25, rue de Ponthieu**
**F-75008 Paris (FR)**

Jouve, 18, rue St-Denis, 75001 Paris, France

Procédé de découpage par fissuration d'une paroi métallique ou d'alliage métallique

La présente invention concerne un procédé de découpage par fissuration d'une paroi métallique ou d'alliage métallique.

Ce procédé permet de découper manuellement ou à l'aide d'un appareil automatique des tôles ou des pièces métalliques, notamment d'acier, et ceci en accédant à l'une des faces seulement de la pièce à découper.

On connaît à ce jour un nombre important de procédés de découpage. Ces procédés peuvent être rangés en deux catégories, à savoir les procédés mécaniques d'une part, et les procédés qui fondent localement le métal de la tôle d'autre part. Au nombre des procédés mécaniques, on peut citer le cisaillage, le fraisage, le sciage et le meulage avec une meule à tronçonner. En ce qui concerne les procédés par fusion, on peut citer les procédés oxyacétyléniques, à l'arc avec électrode enrobée, par plasma, au laser, et par bombardement électronique.

Pour que ces procédés connus puissent être utilisés, certaines conditions doivent être remplies. Tout d'abord, ils nécessitent la traversée de toute l'épaisseur de la tôle, que ce soit par l'outil dans le cas des procédés de découpage mécaniques, ou par la source chaude dans le cas des procédés de découpage par fusion. Il est donc nécessaire de disposer d'un espace suffisant à l'envers de la pièce. On peut ajouter que les procédés de découpage mécaniques ne peuvent être appliqués qu'à des pièces ou à des tôles possédant une géométrie relativement régulière et une planéité convenable.

Or, il est parfois nécessaire de découper des pièces de forme quelconque sans empiéter sur l'envers de celles-ci. L'invention a précisément pour objet un procédé de découpage d'une paroi métallique, notamment d'acier, à partir d'une seule de ses faces, sans nécessiter un espace disponible à l'envers de la pièce.

Ce procédé utilise le pouvoir fissurant d'un métal, tel que le cuivre, sur un autre métal, par exemple l'acier, ou sur un alliage métallique. On a en effet remarqué que l'on pouvait, par apport de cuivre dans un métal en fusion, provoquer une fissuration de ce métal. Cette propriété remarquable sera appelée, dans la suite, pouvoir fissurant du cuivre.

Plus précisément, ce procédé de découpage par fissuration d'une paroi métallique ou d'alliage métallique, se caractérise en ce que :

— on chauffe une face de la paroi pour faire fondre localement le métal sur une profondeur limitée à une fraction de l'épaisseur de la paroi,

— on apporte, dans la zone fondue, un métal ayant un pouvoir fissurant,

— on déplace les moyens de chauffage suivant le profil à découper, tout en continuant à apporter dans la zone fondue le métal ayant un pouvoir fissurant.

Le métal ayant un pouvoir fissurant peut être le carbone, l'aluminium, le silicium, le cuivre. On peut également utiliser des alliages de ces métaux avec des éléments du groupe IV ou du groupe IIB.

Avec ces différents fissurants, on peut découper les aciers, les aciers inoxydables, austénitiques, ferritiques, réfractaires, les inconels, etc...

En utilisant différentes sources de chauffage telles que ARC, TIG, MIG, HF, FE, on peut découper des épaisseurs de tôle de 25 mm. En combinant des sources différentes de chauffage, on peut découper de très fortes épaisseurs.

On peut également utiliser des fils fourrés, c'est-à-dire un cylindre réalisé en prenant un feuillard que l'on remplit de poudre d'un métal fissurant de base (carbone, silicium, aluminium, cuivre) et d'éléments du groupe IV ou du groupe IIB.

Il est évident que le procédé de découpage de l'invention s'applique à une pièce d'acier quelconque, notamment à une tôle d'acier.

Ainsi, le procédé selon l'invention permet de n'échauffer qu'une seule face de la paroi ou de la pièce à découper, puisque la source de chaleur et la zone fondue sont limitées au recto de la plaque. Des feuilles minces ou d'autres pièces sensibles à la chaleur peuvent être mises à proximité ou même au contact de la paroi à découper. Par exemple, le procédé selon l'invention permet d'ouvrir des containers renfermant des tubes minces au contact de la tôle du container sans détériorer les tubes minces.

Le découpage à l'aide du procédé selon l'invention peut se faire sans apport de liquide de refroidissement. Cela permet de découper des plaques ou des pièces portées à une température élevée, par exemple parce qu'elles sortent d'un four, sans avoir besoin de les refroidir préalablement.

Le procédé peut être exécuté manuellement. Il peut également être exécuté à l'aide d'un appareil automatique. Dans ce cas, les lignes de fissuration sont beaucoup plus régulières, voire parfaitement rectilignes.

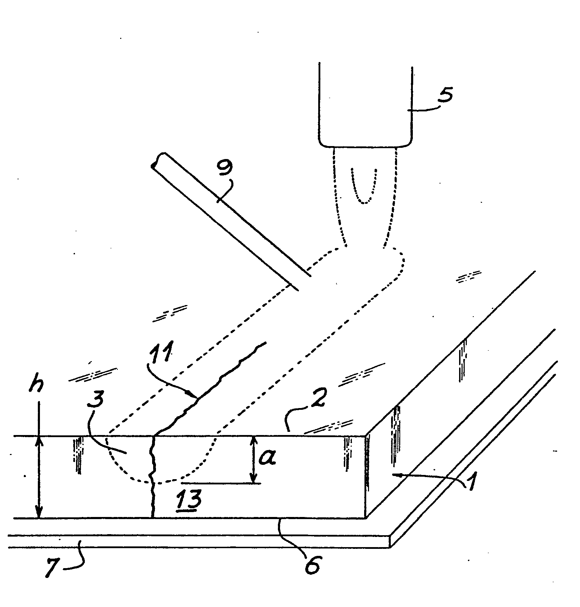

D'autres caractéristiques et avantages de la présente invention apparaîtront mieux à la lecture de la description qui suit d'exemples de réalisation donnés à titre explicatif et nullement limitatif en référence à la figure unique annexée sur laquelle on a illustré schématiquement le procédé de découpage par fissuration.

Exemple 1

On a désigné par la référence 1, la pièce à découper. Cette pièce 1 est une plaque d'acier inoxydable de 400 mm de longueur et de 4 mm d'épaisseur. La face 2 de la pièce 1 est seule échauffée au cours du découpage selon le procédé de l'invention. La pièce 1 est échauffée localement dans la zone 3 au moyen d'une torche de soudage 5 ou de tout autre appareil de chauffage approprié permettant de fondre la pièce sur une épaisseur suffisante. On remarque que la profondeur a de la zone fondue 3 est limitée à une fraction de l'épaisseur h de la pièce 1. Ainsi, la face 6 de la pièce 1 ne « voit pas » la chaleur de la torche 5. C'est pourquoi le procédé selon l'invention permet de découper une pièce telle que 1 sans détériorer une autre pièce sensible à la chaleur située à sa proximité ou même à son contact. Cette tôle mince 7 se trouve directement au contact de la face 6 de la pièce à découper, comme c'est le cas par exemple dans un container renfermant un tube mince.

Conformément à l'invention, on apporte dans la zone fondue 3 un métal ayant un pouvoir fissurant de l'acier. Ce métal 9 peut être constitué par exemple par du cuivre, ou par tout autre matériau approprié comme par exemple un alliage de cuivre et de silicium à 1,5 % en poids de silicium. Dans l'exemple de réalisation envisagé, la quantité de cuivre nécessaire a été de 1 m de fil de diamètre 1,6 mm.

Le point essentiel est de provoquer le démarrage de la fissure 11, ce qui nécessite une certaine expérience. Ensuite, la fissure progresse au fur et à mesure de l'avancement de la torche 5 que l'on déplace suivant le profil à découper, tout en continuant l'apport de métal 9 dans la zone fondue 3.

Bien que l'épaisseur a de la zone fondue 3 soit limitée à une fraction seulement de l'épaisseur h de la pièce 1, la fissure 11 se propage dans le métal solide 13 jusqu'à déboucher sur la face 6.

Exemple 2

Dans ce deuxième exemple, on découpe par fissuration une tôle en acier inoxydable de 20 mm d'épaisseur. On apporte le métal ayant un pouvoir fissurant de l'acier sous la forme d'un barreau 9 en carbone. La profondeur a de la zone fondue 3 est limitée à 30 % de l'épaisseur de la tôle. Les moyens de chauffage sont constitués par une torche TIG (tungstene inert gas). La vitesse de défilement de cette torche est de 100 mm par minute.

Exemple 3

Dans ce troisième exemple, on découpe une tôle de 25 mm d'épaisseur en acier. Le métal ayant un pouvoir fissurant est apporté sous la forme d'un barreau 9 en alliage Al-Si (13 % Si). La profondeur a de la zone fondue est limitée à 25 % environ de l'épaisseur de la tôle. Les moyens de chauffage sont constitués par une torche MIG (Midjet inert gas). La vitesse de défilement de cette torche est de 60 mm par minute.

Exemple 4

Dans ce quatrième exemple, on découpe une tôle de 40 mm d'épaisseur en acier inoxydable. Le métal ayant un pouvoir fissurant est constitué par un barreau 9 en Cu-Sn (10 % de Sn). Les moyens de chauffage sont constitués par un chauffage haute fréquence combiné avec une torche TIG. La profondeur a de la zone fondue est de 50 % environ de l'épaisseur de la tôle. La vitesse de défilement des moyens de chauffage est de 45 mm par minute.

## Revendications

1. Procédé de découpage par fissuration d'une paroi métallique ou d'alliage métallique, caractérisé en ce que :
— on chauffe une face de la paroi (1) pour faire fondre localement le métal sur une profondeur (a) limitée à une fraction de l'épaisseur (h) de la paroi (1),
— on apporte, dans la zone fondue (3), un métal (9) ayant un pouvoir fissurant,
— on déplace les moyens de chauffage (5) suivant le profil à découper, tout en continuant à apporter dans la zone fondue le métal (9) ayant un pouvoir fissurant.

2. Procédé selon la revendication 1, caractérisé en ce que la paroi métallique est en acier.

3. Procédé selon l'une quelconque des revendications 1 et 2, caractérisé en ce que l'on déplace manuellement les moyens de chauffage (5) et l'apport de métal (9).

4. Procédé selon l'une quelconque des revendications 1 et 2, caractérisé en ce que les moyens de chauffage (5) et l'apport de métal (9) sont portés par un appareil qui se déplace automatiquement suivant le profil à découper.

5. Procédé selon l'une quelconque des revendications 1 à 4, caractérisé en ce que le métal (9) ayant un pouvoir fissurant est choisi parmi le groupe constitué du cuivre et d'un alliage Cu-Si à 1,5 % en poids de silicium.

6. Procédé selon la revendication 5, caractérisé en ce que le métal (9) ayant un pouvoir fissurant est choisi parmi le groupe constitué du carbone, de l'aluminium, du cuivre, du silicium et de leurs alliages avec des éléments du groupe IV ou du groupe IIB.

7. Procédé selon l'une quelconque des revendications 1 à 6, caractérisé en ce que l'apport de métal (9) est constitué par un feuillard roulé, rempli de poudre d'au moins un métal ayant un pouvoir fissurant, puis fermé.

## Claims

1. Cutting process through splitting of a metal or metal alloy wall, characterized in that
— one surface of the wall (1) is heated to provide localized melting of the metal to a depth (a) which is a fraction of the thickness (h) of the wall (1),
— a metal (9) having splitting power is brought into the molten zone (3),
— heating means (5) are moved according to the profile to be cut, while continuing to bring the metal (9) with splitting power into the molten zone.

2. Process according to Claim 1, characterized in that the metal wall comprises steel.

3. Process according to either of Claims 1 and 2, characterized in that the movement of the heating means (5) and the bringing in of the metal (9) are conducted manually.

4. Process according to either of Claims 1 and 2, characterized in that the heating means (5) and the means for bringing in metal (9) are carried on an apparatus that is automatically moved along the profile to be cut.

5. Process according to any one of Claims 1 to 4, characterized in that the metal (9) having splitting power is selected from the group consisting of copper and a Cu-Si alloy containing 1,5 % by weight of silicon.

6. Process according to Claim 5, characterized in that the metal (9) having splitting power is selected from the group consisting of carbon, aluminium, copper, silicon and alloys thereof with elements of group IV or group IIB.

7. Process according to any of Claims 1 to 6, characterized in that the means for bringing in metal (9) comprise a rolled strip filled with at least one powdered metal having splitting power, and then sealed.

**Ansprüche**

1. Verfahren zum Schneiden einer Wand aus Metall oder einer Metallegierung durch Rißbildung, dadurch gekennzeichnet, daß man eine Seite der Wand (1) erhitzt, um das Metall auf eine auf einen Bruchteil der Dicke (h) der Wand (1) beschränkte Tiefe (a) örtlich zum Schmelzen zu bringen, daß man in die geschmolzene Zone (3) ein eine rißbildende Wirkung aufweisendes Metall (9) einträgt, und daß man die für die Erwärmung verwendete Einrichtung (5) entsprechend dem zu schneidenden Profil fortbewegt, während man der geschmolzenen Zone fortlaufend das die rißbildende Wirkung aufweisende Metall (9) zuführt.

2. Verfahren nach Anspruch 1, dadurch gekennzeichnet, daß die metallene Wand aus Stahl ist.

3. Verfahren nach einem der Ansprüche 1 und 2, dadurch gekennzeichnet, daß man die für die Erwärmung verwendete Einrichtung (5) sowie den Metalleintrag (9) von Hand fortbewegt.

4. Verfahren nach einem der Ansprüche 1 und 2, dadurch gekennzeichnet, daß die für die Erwärmung verwendete Einrichtung (5) sowie der Metalleintrag (9) von einer Vorrichtung getragen werden, welche sich automatisch entsprechend dem zu schneidenden Profil fortbewegt.

5. Verfahren nach einem der Ansprüche 1 bis 4, dadurch gekennzeichnet, daß das die rißbildende Wirkung aufweisende Metall (9) aus der aus Kupfer und einer Cu-Si-Legierung mit 1,5-Gew.% Silizium gebildeten Gruppe ausgewählt ist.

6. Verfahren nach Anspruch 5, dadurch gekennzeichnet, daß das die rißbildende Wirkung aufweisende Metall (9) aus der aus Kohlenstoff, Aluminium, Kupfer, Silizium und Legierungen derselben mit Elementen der Gruppe IV und der Gruppe IIB gebildeten Gruppe gewählt ist.

7. Verfahren nach einem der Ansprüche 1 bis 6, dadurch gekennzeichnet, daß der Metalleintrag (9) aus einem eingerollten Stahlband gebildet ist, welches mit einem Pulver wenigstens eines eine rißbildende Wirkung aufweisenden Metalls gefüllt und anschließend verschlossen ist.